# EUROPEAN PATENT SPECIFICATION

(11) **EP 1 010 316 B1**
(45) Date of publication and mention of the grant of the patent: **02.05.2002**
(21) Application number: 98940377.9
(22) Date of filing: 25.08.1998
(51) Int. Cl.: H04N 1/08

(54) **MOUNTING FILM TRANSPARENCIES IN A ROTARY DRUM SCANNER**
TRANSPARENTFILMMONTIEREN IN EINEM DREHTROMMELABTASTER
MONTAGE DE DIAPOSITIVES SUR UN APPAREIL A LECTURE OPTIQUE ET A TAMBOUR ROTATIF

(30) Priority: 28.08.1997 GB 9718229
(43) Date of publication of application: 21.06.2000
(73) Proprietor: ICG Limited, Cheltenham Gloucestershire GL51 7RD (GB)
(72) Inventor: DRESCH, Alan, Richard, Evesham Worcesterhire WR16 6QG (GB)
(74) Representative: Sherrard-Smith, Hugh
(86) International application number: GB9802549
(87) International publication number: WO9912340

(56) References cited:
- EP-A- 0 480 626
- GB-A- 2 197 964
- GB-A- 2 276 016
- PATENT ABSTRACTS OF JAPAN vol. 096, no. 007, 31 July 1996 & JP 08 084223 A (TOPPAN PRINTING CO LTD), 26 March 1996

## Description

This invention relates to mounting film transparencies in a graphic reproduction process and more particularly to an apparatus and a method for mounting a transparency, for scanning, on a drum of a rotary drum scanner.

Modern methods of producing, for example, magazines and other graphic works can require that a film transparency is electronically scanned and the information contained therein stored in digital form. A rotary drum scanner is used for scanning colour and shade information from a colour transparency and comprises a transparent drum upon which the transparencies are mounted and then rotated at speed. A reading head is then moved linearly with respect to the rotating drum to capture the information in the transparency.

Conventionally, the transparency is mounted on the outer surface of the drum using adhesive tape with the emulsion side outermost and the celluloid backing material of the film in contact with the surface of the drum. To reduce the problem of Newton's rings, a variety of substances such as lacquer, anti-Newton ring powder or special mounting oil are placed between the film and the outer surface of the drum.

To further improve the optical coupling of the transparency with the drum it is also known to double oil mount the transparency to the outer surface of the drum. This involves placing a transparent overlay sheet over the surface of the oil mounted transparency with a further layer of oil between the outer surface of the transparency and the overlay sheet.

The overlay sheet is tightly secured to the drum to prevent oil from escaping. Whilst such a method is found to be effective it has a number of drawbacks. Firstly it is time consuming as it requires the drum to be removed from the scanner which limits the throughput of scanned work. Secondly double oil mounting requires considerable manual dexterity to ensure that all air bubbles are excluded from the oil layers. Thirdly the technique can be messy and usually requires the transparency to be cleaned after scanning to remove any oil residue.

It has also been proposed in our UK patent number GB 2276016 to mount film transparencies by holding them in contact with the inside of the drum using centrifugal force as the drum is rotated. A stated advantage of this method is that the use of oil is eliminated. Furthermore the document discloses that the problems associated with Newton's rings can be minimised by mounting the film transparency with its emulsion side in contact with the inside of the drum. Although such an arrangement is quick and effective, it still has certain limitations.

Firstly the inventors have appreciated that whilst this arrangement minimises the effects of Newton's rings it does not entirely eliminate them. Secondly the method does little to minimise the effect that scratches, or other contaminants, on the surface of the transparency or the drum may have on the quality of the scanned image.

The present invention arose in an endeavour to overcome, at least in part, the limitations of the known arrangements.

According to the present invention there is provided a method of mounting a transparency, for scanning, on a drum of a rotary drum scanner, the method comprising: placing the transparency on the inside of the drum; providing a liquid on the inside of the drum; and rotating the drum at a sufficiently high speed for liquid to move over a surface of the transparency to form a film of liquid thereon. It will be appreciated that as the liquid moves over the surface of the transparency any air bubbles or particles of dust in the fluid will be automatically expelled. Additionally the film of liquid fills any scratches or irregularities on the surface of the transparency thereby reducing any optical effects these may have.

Advantageously the method comprises providing the liquid between the inner curved surface of the drum and the transparency such that when the drum is rotated the film of liquid forms between the transparency and the inner surface of the drum. This film of liquid improves the optical coupling between the transparency and the drum which eliminates the effect of Newton's rings. Furthermore this film of liquid fills any irregularities or scratches on the surface of the drum. To further enhance the optical coupling the liquid advantageously has a refractive index which is similar to, or substantially the same as, the refractive index of the drum and the transparency.

Alternatively, or in addition, the method advantageously comprises providing liquid on the inside of the drum such that when the drum is rotated the film of liquid forms on the surface of the transparency which is remote from the inner surface of the drum. The film of liquid, which is substantially uniform due to the rotation of the drum, reduces the effect of scratches or other irregularities on the surface of the transparency. Furthermore the action of the liquid passing over the surface of the film transparency as the drum is being rotated up to speed has a cleaning effect which removes dust and other contaminant particles. This cleaning effect is found to further enhance the scanning resolution.

Preferably the method further comprises providing a liquid trap to trap liquid once the drum has been rotated thereby preventing the liquid from otherwise damaging the scanner.

Conveniently liquid is provided on the inside of the drum by providing a liquid reservoir locatable within the drum and placing liquid inside the reservoir wherein rotation of the drum causes liquid to pass from the reservoir over the surface of the transparency to form a film on the surface which is remote from the inner surface of the drum.

The method preferably further comprises providing fluid between the inner curved surface of the drum and transparency before the drum is rotated ensuring that a film of liquid forms on both surfaces of the transparency such that the transparency is located within a "virtual" drum of liquid. As the liquid has a refractive index which is substantially the same as the transparency, the number of effective optical surfaces is only two, the drum and "virtual" drum; this further enhances scanning performance.

For convenience the liquid can be provided between the inner surface of the drum and the transparency by rotating the drum to form a film of liquid on the inner curved surface of the drum and then placing the transparency on the inside of the drum. In alternative arrangements the liquid can be placed directly between the transparency and the drum before the drum is rotated using, for example, a pipette.

Preferably the method further comprises providing a liquid stop to prevent liquid from escaping from the drum when the drum is rotated.

Advantageously the method further comprises holding the transparency in position whilst the drum is being rotated up to a sufficiently high speed for the transparency to be urged towards the inside of the drum. This is conveniently achieved by the provision of a clip into which the transparency can be inserted.

According to a further aspect of the invention there is provided an apparatus for mounting a transparency, for scanning, on a drum of a rotating drum scanner, the apparatus comprising: a liquid dispenser arranged to dispense liquid in the drum of the scanner and arranged such that rotation of the drum at sufficiently high speed causes liquid to move over a surface of the transparency to form a film of liquid thereon and wherein said transparency is locatable against the inner surface of the drum.

In a preferred embodiment of the apparatus the liquid dispenser comprises a liquid reservoir which is locatable on the inside of the drum. The reservoir most conveniently comprises an annular channel, into which liquid can be placed and which is locatable coaxially within the drum. For convenience the annular channel comprises a separate insert which can be inserted into a drum of an existing scanner.

Advantageously the liquid reservoir is divided into two or more compartments to assist in retaining the liquid uniformly around the reservoir when the drum is stationary. Such an arrangement is particularly advantageous when the drum is rotatable about an axis which is not vertical. Preferably the channel of the liquid reservoir is profiled to facilitate cleaning. For example, the channel may be profiled to be substantially finger shaped.

It will be appreciated that in alternative embodiments of the invention the liquid dispenser can be locatable externally of the drum, such as within the body of the scanner, and the apparatus further comprises means for dispensing liquid into the drum through one end. This can, for example, be achieved using a tank of liquid with a pump arranged to dispense liquid through the open end of the drum or through the hub used to rotate the drum.

With such an arrangement it is further preferable to have a liquid trap arranged to trap liquid once the drum has been rotated and this can conveniently comprise a channel which is locatable coaxially within the drum. Preferably the channel contains an absorbent material to trap and retain the liquid though it will be appreciated that other arrangements could be used such as a lip on the edge of the channel which is reverse directed to the direction of movement of the liquid.

In any of the apparatus described it is preferred to further provide a liquid stop which is arranged to prevent liquid from escaping from the drum when it is rotated. Most conveniently this can take the form of an annular channel which is locatable coaxially within or on the drum and which is profiled to facilitate cleaning.

In a particular preferred form of the apparatus when the drum is rotatable about an axis which is substantially vertical, or at a small angle thereto, the liquid reservoir is locatable at the lower end of the drum and the liquid stop locatable at the upper end of the drum.

With such an arrangement it is found that any imbalance of the drum is automatically compensated for even when a number of transparencies are mounted on one region of the inner surface of the drum (ie when the transparencies are not uniformly circumferentially spaced around the inner surface of the drum). As a result of the improved drum balance less vibration occurs making sharper scans possible.

Whilst the use of the above apparatus is found to virtually eliminate the formation of air bubbles between the transparency and the inner surface of the drum the apparatus preferably further comprises means for placing liquid between the surface of the transparency and the inner curved surface of the drum before the drum is rotated. As the drum is rotated the transparency is urged towards the inner surface of the drum by centrifugal force, causing the liquid to move over the surface of the transparency to form a film of liquid between the transparency and the inner surface of the drum. As the liquid moves over the surface, any air bubbles are automatically expelled from the film of liquid.

Preferably the apparatus further comprises means for holding the transparency in position until the drum is rotated at a sufficiently high speed for the transparency to be urged towards the inner surface of the drum. Conveniently this means comprises a clip arranged to urge at least one edge of the transparency towards the inner surface of the drum.

When using the liquid reservoir described above the clip is preferably formed as an integral part of the liquid reservoir, such as a nip formed between the inner curved surface of the drum and the outer surface of the annular channel.

To further enhance the cleaning effect, the liquid advantageously includes a cleaning agent. Furthermore the liquid advantageously includes a dye to assist in observing the movement of the liquid over the inner surface of the drum. This enables an operator to determine when a uniform film of liquid has developed and hence when scanning should commence. To obtain the optimum optical performance the liquid preferably has a refractive index substantially the same as the refractive index of the drum.

According to yet a further aspect of the invention there is provided a drum or a rotary drum scanner incorporating the apparatus described above.

Apparatus in accordance with the invention will now be described by way of example only with reference to the accompanying drawings in which:
Figure 1 is a cross-section through a drum incorporating apparatus in accordance with the invention;
Figure 2 is a cross-section through a drum incorporating preferred apparatus in accordance with the invention;
Figure 3a is a plan view of the liquid reservoir of the apparatus of Figure 2;
Figure 3b is a cross-section of the liquid reservoir of Figure 3a through the line 'AA';
Figure 4a shows a drum incorporating a further apparatus in accordance with the invention and an enlarged portion of the liquid trap;
Figure 4b is a plan view in the direction 'B' of the liquid trap of the apparatus of Figure 4a; and
Figure 5 is a schematic representation of a rotary drum scanner incorporating apparatus in accordance with a further aspect of the invention.

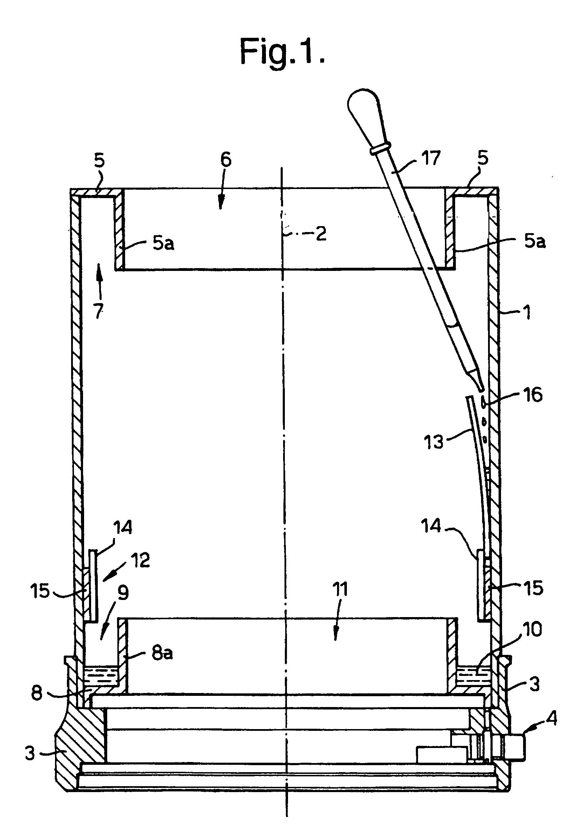

Referring to Figure 1 there is shown a drum 1 for a rotary drum scanner. The drum 1 is made of a transparent material and is rotatable about an axis 2. At its lower end the drum 1 is attached to a hub 3 which includes a locking mechanism, generally denoted 4, for detachably coupling the drum 1 and hub 3 to the drive mechanism of a rotary drum scanner (not shown).

Attached to the upper, open, end of the drum 1 is an annular cap 5 (hereinafter referred to as an oil or liquid stop) . The oil stop 5 includes a portion 5a which extends into and coaxially with the wall of the drum 1. The portion 5a together with the inner surface of the drum forms an annular channel 7, the purpose of which is described later. The oil stop 5 further defines a circular aperture 6 which allows access to the interior of the drum 1.

At the lower end of the drum 1 an annular insert 8 (hereinafter referred to as an oil or liquid reservoir) is provided. The oil reservoir 8 has a portion 8a which extends coaxially with the wall of the drum 1. The portion 8a together with the inner surface of the drum forms an annular channel 9 . The oil reservoir 8 is sealed to the drum using adhesive such that the annular channel 9 is capable of retaining mounting oil 10. The oil reservoir 8 further defines a circular aperture 11 which enables the scanning head of the rotary drum scanner to pass through the hub 3 and into the interior of the drum 1 during scanning. It will be appreciated that it is within the scope of the invention for the scanning head of the rotary drum scanner to alternatively enter the drum 1 by passing through the open end of the drum 1.

A transparency clip 12 is provided to retain the lower edge of a transparency 13 in contact with the inner surface of the drum 1. The term "transparency" is intended to have a broad meaning to include any material containing an image from which colour and/or shade information is to be scanned. Accordingly it will be appreciated that this term applies to images which are both positive or negative, monochrome or colour and "copydot" format transparencies. The transparency clip 12 comprises a strip of transparent polyester film 14 which has its lower portion fixed to the inner surface of the drum by means of adhesive 15. The film 14 thus provides a nip around its upper edge into which a transparency 13 can be readily inserted.

In operation the edge of the transparency 13 to be scanned is pushed into the transparency clip 12. A few drops of mounting oil 16 are applied between the transparency 13 and the inner surface of the drum 1, which is most conveniently achieved using a pipette 17, and the transparency 13 is pushed into contact with the drum 1. The channel 9 of the oil reservoir 8 is filled with mounting oil 10. The mounting oil 10 is a transparent liquid which preferably has a refractive index which is similar to, or the same as, the drum 1 and the transparency 13. However, the invention also applies to other liquids such as, for example, liquid paraffin.

As the drum 1 is rotated, two things happen.

Firstly, the transparency 13 is urged towards the inner surface of the drum by centrifugal force causing the oil to move over the surface of the transparency and to expel any air bubbles from under the surface of the transparency. This results in the formation of a substantially uniform film of oil between the transparency and the inner surface of the drum. This film of oil ensures that the transparency 13 is in good optical contact with the inner surface of the drum 1. As a result of this improved optical coupling the effects of Newton's rings are eliminated and higher resolution scanning is possible.

Secondly, oil travels up from the oil reservoir 8 over the inner surface of the drum 1 and over the surface of the transparency 13 which is remote from the inner surface of the drum. The oil continues to travel over the inner surface of the drum until it forms a uniform film over the entire inner surface of the drum 1 and any transparency inside the drum (ie the surface of the transparency which is remote from the inner surface of the drum). Oil which reaches the top of the drum is prevented from escaping from the drum by the oil stop 5. Rotation of the drum ensures that the thin film of oil covering the transparency is highly uniform. This thin film of oil ensures that the effects of scratches or other irregularities on the surface of the transparency are greatly reduced. Furthermore it is found that the oil moving over the surface of the transparency has a cleaning effect by removing dust and other contaminants. To further assist in this cleaning action the oil can include a cleaning agent. In addition it is found that perfect drum balance is automatically achieved even when a number of transparencies are mounted on one region of the inner surface of the drum (ie when the transparencies are not uniformly circumferentially spaced around the inner surface of the drum). This improved drum balance reduces the scanner vibration and enhances the quality of the scanned image.

In a further embodiment of the invention the mounting oil includes a dye such as, for example, fluorescein or other fluorescent dye. By illuminating the drum with ultra violet light the movement of the oil over the drum's surface can be readily observed, enabling the operator to determine when a uniform film of oil has developed and hence when to commence scanning. Any effects that the dye has on the colour of the scanned image can be compensated for by the software used to operate the scanner.

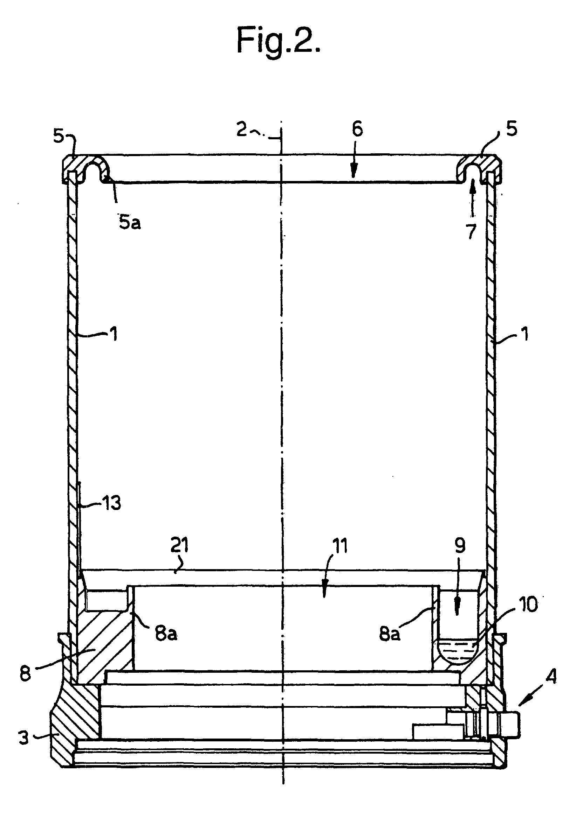

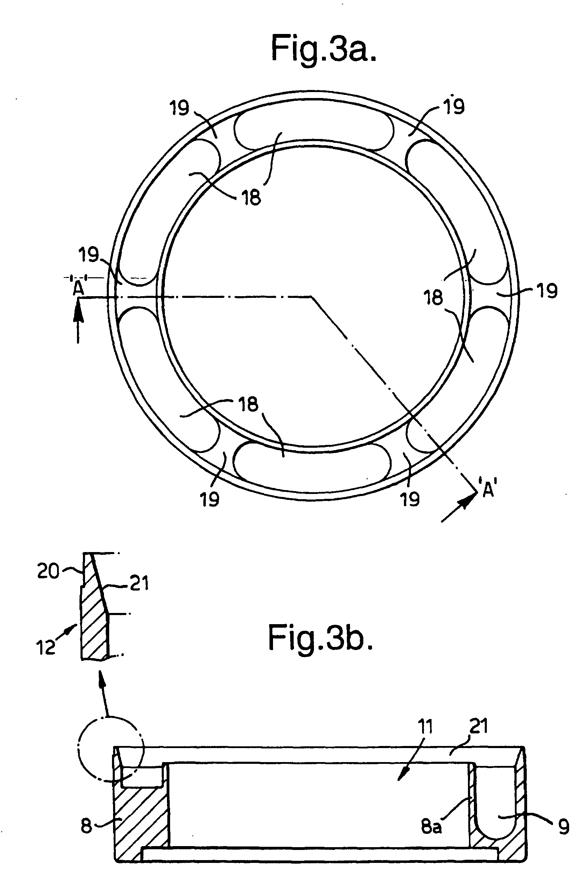

Referring to Figure 2 there is shown a drum for a rotary drum scanner which incorporates apparatus according to the preferred embodiment of the invention. For consistency, the same reference numerals have been used to denote parts which are equivalent to those shown in Figure 1. This preferred form of apparatus is particularly suited for use in a rotary drum scanner in which the drum is rotatable about an axis 2 which is at a small angle to the vertical; in the example shown it is intended for use for a drum orientation of 15° to the vertical. The channel 9 of the oil reservoir 8 is divided into a number of compartments 18, six in the example shown, as will be apparent from Figure 3a. Dividing the reservoir in this way assists in retaining the oil uniformly around the circumference of the drum 1 when the drum is stationary. To facilitate cleaning of the oil reservoir 8. the bottom of the channel is profiled with a smooth curve, as will be apparent from Figure 3b, and is preferably profiled such that an operator can use their finger to readily wipe the surface of the channel 9. To further assist in the cleaning of the reservoir, the dividing walls 19 are also curved on their inner surface as shown in Figure 3a.

In common with the oil reservoir of Figure 1 the reservoir 8 comprises an annular insert which can be located in the drum of an existing scanner. In this preferred form, the reservoir 8 already has an annular channel 9 formed within it. A particular advantage of this arrangement is that the transparency clip 12 can then be formed as an integral part of the insert 8. As will be most apparent from the enlarged section of Figure 3b, a rebate 20 is formed on the outer curved surface of the reservoir. The depth, in a radial direction, of rebate 20 is dimensioned to be approximately the thickness of a film transparency such that when the reservoir 8 is inserted into the drum the rebate 20, in conjunction with the inner surface of the drum, forms a nip into which a transparency 13 can be retained. To assist the oil 10 in travelling from the reservoir 8 over the inner surface of the drum, the outer peripheral wall 21 of the reservoir 8 is tapered towards the drum 1.

The operation of the apparatus is exactly the same as that described for the apparatus of Figure 1. Although the oil stop 5 in this embodiment is formed as an end cap having a channel already integrally formed, its operation is the same in that it prevents oil from escaping from the drum when the drum is rotating. It will be appreciated therefore that the oil reservoir 8 and/or the oil stop 5 need not be limited to the geometry illustrated. For example, the oil reservoir 8 and oil stop 5 could be formed as an integral part of the drum 1 or, in the case of the reservoir, as an integral part of the hub 3.

In both of the embodiments described, it is preferable to provide a few drops of oil 16 between the transparency 13 and the inner wall of the drum 1 before the drum is rotated. This, however, is not essential to the invention, though it is preferable since with such an arrangement the transparency, when the drum is rotating at speed, is located within a "virtual" drum of oil. Due to the rotation of the drum 1 this "virtual" drum of oil is very uniform.

An alternative method of introducing oil between the transparency 13 and the inner wall of the drum can be achieved using the thin layer of oil which will remain on the surface of the drum from the previous scan. This is best achieved by rotating the drum up to speed to form a thin film of oil on the inner surface of the drum without any transparencies present, stopping the drum, inserting a transparency and then subsequently rotating the drum to speed.

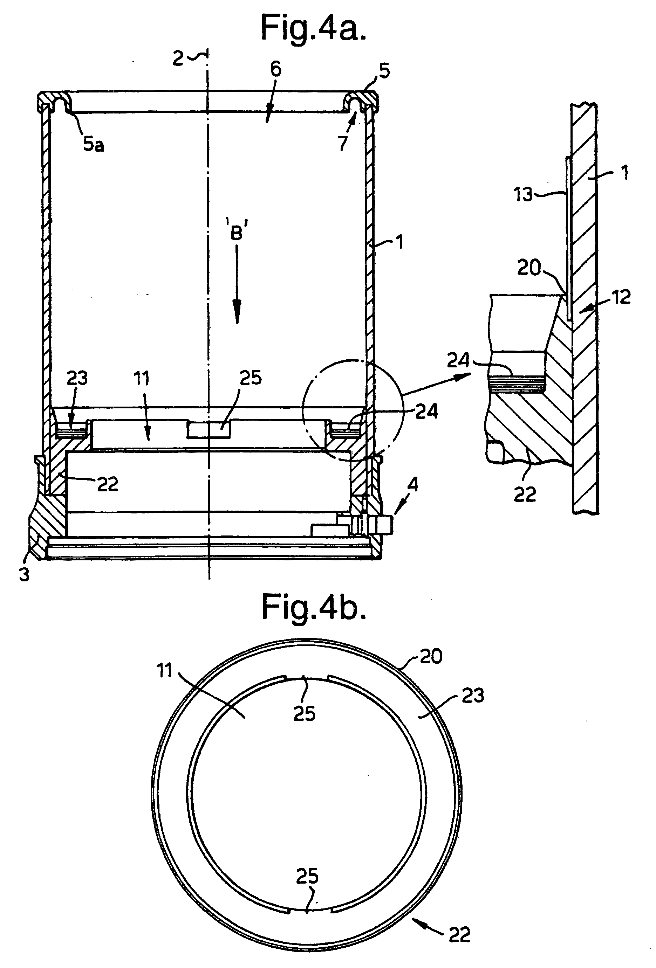

Referring to Figures 4a and 4b, there is shown a drum incorporating a further apparatus in accordance with the invention. In this embodiment the oil reservoir 8 is replaced with an oil or liquid trap 22. In terms of geometry the oil trap 22 is very similar to the oil reservoir 8 in that it comprises an annular insert which defines an annular channel 23. In common with the oil reservoir 8 of Figures 3a and 3b, the outer surface of the insert includes a rebate 20 on its outer surface which defines a nip in conjunction with the inner surface of the drum into which a transparency can be clipped. This rebate will be most apparent from the enlarged portion of Figure 4a. Located in the base of the annular channel 23, there is a layer of absorbent material 24.

In operation of this apparatus, the transparency is secured into the clip 12, a few drops of oil are placed between the transparency and the inner surface of the drum, the drum is rotated up to a sufficiently high speed for the transparency to be urged towards the drum, thereby expelling any air bubbles from the oil film, and the transparency is scanned. Any oil which is expelled from under the transparency and travels up the inside of the drum and reaches the top, is prevented from escaping by the oil trap 5. Once scanning has been completed and the drum stops rotating, any oil that moves back down the inside of the drum will be captured and retained by the absorbent material 24 of the oil trap 22. It will be appreciated that periodically the oil trap 22 will need to be emptied and cleaned. This is most conveniently achieved by replacement of the absorbent material 24. To facilitate easy removal of the ring of absorbent material 24, two slots 25 are provided on the inner wall of the channel 23, as shown in Figure 4b.

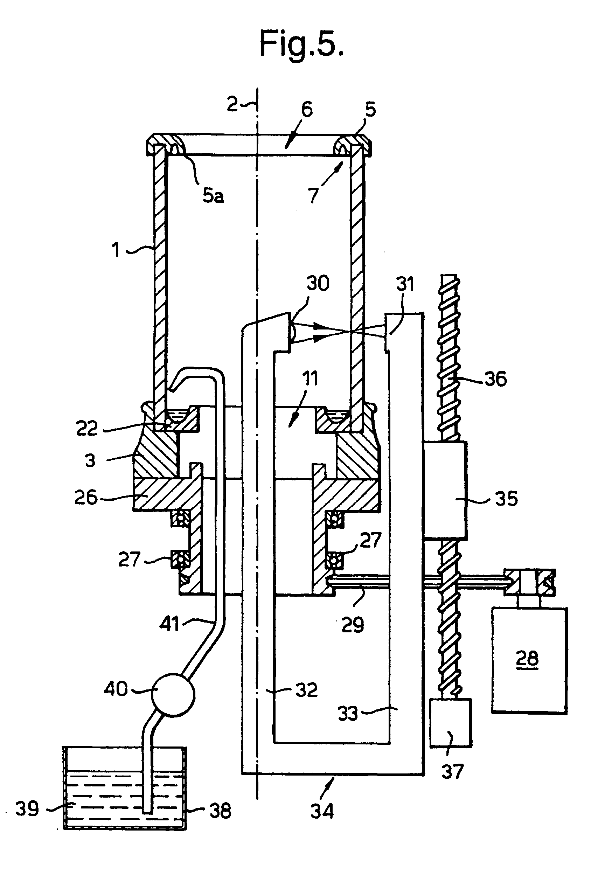

Referring to Figure 5, there is shown a schematic of a rotary drum scanner incorporating apparatus according to yet a further embodiment of the invention. The rotary drum scanner depicted is of a known type as described, for example, in UK patent GB 2280813 which is hereby incorporated by way of reference thereto. As is known, the drum 1 and hub 3 are detachably mounted to a drive hub 26 which is rotatably supported in a bearing assembly 27. The drive hub 26 is rotated by a motor 28 using a drive belt 29. The scanner also includes a scanning assembly which comprises a light source 30 and a reading head 31 which are mounted on respective arms 32, 33 of a generally U-shaped carriage 34. The arm 32 carrying the light source extends through a coaxial bore in the drive hub 26 whilst the arm 33 includes a nut 35 which, in conjunction with a screw drive 36, allows the carriage to be moved upwardly into or downwardly out of the drum 1 to facilitate scanning. The screw drive 36 is driven by an electric motor 37.

In accordance with the present invention, the rotary drum scanner also includes an oil reservoir or tank 38 containing mounting oil 39. Oil from the reservoir is pumped by a pump 40 through a tube 41 into the inside of the drum. The tube 41 passes through the coaxial bore in drive hub 26 and hub 3 to the interior of the drum and is configured to dispense oil in close proximity to the inner surface of the drum 1. The drum 1 also includes a suitable transparency clip into which the transparency is positioned. As illustrated, this is formed as an integral part of the oil trap 22.

In operation, as the drum is rotated up to speed the scanner automatically switches on the pump 40 to introduce oil into the drum. The oil moves upwardly over the surface of the drum and over the transparency to form a film of oil as described previously. Any oil that reaches the top of the drum is prevented from escaping by the oil stop 5. Once the scan has been completed and the drum stops rotating, any excess oil is caught and trapped by the oil trap 22.

It will be appreciated that variations can be made to the embodiments shown which are within the scope of the present invention. For example, other methods of introducing liquid into the drum are contemplated, such as the introduction of oil through the open end of the drum under, for example, the influence of gravity. Furthermore, whilst the drum 1 has been illustrated as being rotatable about an axis 2 which is a vertical or at a small angle thereto, this is not essential to the invention and it is envisaged that the invention can be applied to other drum orientations.

It is also envisaged to use an oil trap in conjunction with an oil reservoir. For example in one arrangement the oil trap is formed as an integral part of the reservoir with the channel of the oil trap being outermost and coaxial with that of the reservoir. The outermost wall of the reservoir is profiled, with for example a radially extending lip, such that as the drum is rotated oil will upon leaving the reservoir fly over the channel of the oil trap to the inside surface of the drum. As the drum decelerates and eventually stops oil will move down the inner surface of the drum and into the trap where it is retained.

Whilst the oil stop 5 is desirable in that it prevents oil escaping from the open end of the drum when it is rotating, this is a preferred feature of the present invention. It will be appreciated that it is a combination of the peripheral speed of rotation of the drum, the quantity of oil within the drum, the length of the drum and the viscosity of the oil that largely determines whether oil will reach the open end of the drum. In alternative embodiments therefore the oil trap can be dispensed with and the oil reservoir 9 can be arranged to contain a small quantity of oil such that when the drum is rotated the film of oil will not reach the open end of the drum. With such an arrangement however it may not be possible to utilise the entire length of the drum for scanning.

It will be appreciated that in all the embodiments described the transparency is locatable on the inside of the drum, that liquid is dispensed into the drum and that the drum is rotated at sufficiently high speed for liquid to move over a surface of the transparency to form a film of liquid thereon. As described, this film of liquid can be between the surface of the transparency and the inner surface of the drum or located on the surface of transparency remote from the inner surface of the drum or on both. It is the method of dispensing or introducing a liquid such that it can move over the surface of the transparency that is considered inventive for it is this method of mounting a transparency which enables the transparency to be mounted quickly and effectively, even by operators of no experience. It is because the liquid moves over the surface of the transparency to form a film that any air bubbles or other contaminants are automatically expelled. In contrast, in the known mounting arrangements great care is taken to ensure that the mounting oil is securely contained and unable to move when the drum is rotated. As a consequence the known mounting methods require considerable expertise to ensure that no air bubbles are present as they cannot be expelled automatically.

In summary, it will be appreciated that the present invention resides in dispensing a liquid into the drum such that rotation of the drum causes the liquid to pass over the surface of the transparency to form a film of liquid thereon.

## Claims

1. A method of mounting a transparency (13), for scanning, on a drum (1) of a rotary drum scanner, the method comprising:
placing the transparency (13) on the inside of the drum and **characterised by** providing a liquid (10) on the inside of the drum; and
rotating the drum at a sufficiently high speed for liquid to move over a surface of the transparency to form a film of liquid thereon.

2. A method according to Claim 1 and comprising providing the liquid (16) between the inner curved surface of the drum (1) and the transparency (13) such that when the drum is rotated the film of liquid forms between the transparency and the inner surface of the drum.

3. A method according to Claim 1 or Claim 2 and comprising providing liquid on the inside of the drum such that when the drum is rotated the film of liquid forms on the surface of the transparency which is remote from the inner surface of the drum.

4. A method according to Claim 1, Claim 2 or Claim 3 and further comprising providing a liquid trap (22) to trap liquid once the drum (1) has been rotated.

5. A method according to Claim 1, Claim 2 or Claim 3 and further comprising providing a liquid reservoir (8) locatable within the drum (1) and placing liquid (10) inside the reservoir wherein rotation of the drum causes liquid to move from the reservoir (8) over the surface of the transparency (13) to form a film of liquid the surface which is remote from the inner surface of the drum.

6. A method according to Claim 5 and further comprising providing liquid between the inner curved surface of the drum (1) and transparency (13) before the drum is being rotated.

7. A method according to Claim 6 wherein the liquid is provided between the inner surface of the drum and the transparency by rotating the drum to form a film of liquid on the inner curved surface of the drum and then placing the transparency on the inside of the drum.

8. A method according to any preceding claim and further comprising providing a liquid stop (5) to prevent liquid from escaping from the drum (1) when the drum is rotated.

9. A method according to any preceding claim and further comprising holding the transparency (13) in position whilst the drum (1) is being rotated up to a sufficiently high speed for the transparency to be urged towards the inside of the drum.

10. An apparatus for mounting a transparency (13). for scanning, on a drum (1) of a rotary drum scanner, the apparatus **characterised by**: a liquid dispenser (8, 38, 40, 41) arranged to dispense liquid in the drum of the scanner and arranged such that rotation of the drum at sufficiently high speed causes liquid to move over a surface . of the transparency to form a film of liquid thereon and wherein said transparency is locatable against the inner surface of the drum.

11. An apparatus according to Claim 10 wherein the liquid dispenser (8) comprises a liquid reservoir (8) which is locatable on the inside of the drum (1).

12. An apparatus according to Claim 11 in which the liquid reservoir (8) comprises an annular channel (9) which is locatable coaxially within the drum (1).

13. An apparatus according to Claim 11 or Claim 12 in which the liquid reservoir (8) is divided into two or more compartments (18).

14. An apparatus according to Claim 12 or Claim 13 in which the channel (9) of the liquid reservoir (8) is profiled to facilitate cleaning.

15. An apparatus according to Claim 14 wherein the channel (9) is profiled to be substantially finger shaped.

16. An apparatus according to Claim 10 in which the liquid dispenser (38, 40, 41) is locatable externally of the drum (1) and further comprising means (4) for dispensing liquid (39) into the drum (1) through one end (11) of the drum.

17. An apparatus according to Claim 16 and further comprising a liquid trap (22) arranged to trap liquid once the drum has been rotated.

18. An apparatus according to Claim 17 in which the liquid trap (22) comprises an annular channel (23) which is locatable coaxially within the drum.

19. An apparatus according to Claim 18 in which the annular channel (23) contains absorbent material (24) to trap the liquid.

20. An apparatus according to any one of Claims 10 to 19 and further comprising a liquid stop (5) arranged to prevent liquid from escaping from the drum (1) when it is being rotated.

21. An apparatus according to Claim 20 in which the liquid stop (5) comprises an annular channel (7) which is locatable coaxially within the drum.

22. An apparatus according to Claim 21 in which the channel (7) of the liquid stop (5) is profiled to facilitate cleaning.

23. An apparatus according to any one of Claims 20 to 22 wherein when the drum (1) is rotatable about an axis (2) which is substantially vertical, or at a small angle thereto, the liquid reservoir (8) is locatable at the lower end of the drum and the liquid stop (5) locatable at the upper end of the drum.

24. An apparatus according to any one of Claims 10 to 23 and further comprising means (17) for placing liquid (16) between the surface of the transparency (13) and the inner curved surface of the drum (1) before the drum is rotated.

25. An apparatus according to any one of Claims 10 to 24 and further comprising means (12) for holding the transparency (13) in position until the drum (1) is rotated at a sufficiently high speed for the transparency to be urged against the inner surface of the drum.

26. An apparatus according to Claim 25 in which the means (12) comprises a clip (14, 15) arranged to urge at least one edge of the transparency (13) against the inner surface of the drum.

27. An apparatus according to Claim 26 when dependent of any one of Claims 1 to 15 wherein the clip (12) is formed as an integral part of the liquid reservoir (8).

28. An apparatus according to Claim 27 in which the clip (12) comprises a nip (20) formed between the inner curved surface of the drum (1) and the outer surface of the annular channel (9).

29. An apparatus according to any one of Claims 10 to 28 in which the liquid includes a cleaning agent.

30. An apparatus according to any one of Claims 10 to 29 in which the liquid includes a dye to assist in observing the movement of the liquid over the inner surface of the drum.

31. An apparatus according to any one of Claims 10 to 30 in which the liquid has a refractive index substantially the same as the refractive index of the drum.

32. A drum (1) incorporating apparatus according to any one of Claims 10 to 31.

33. A rotary drum scanner incorporating apparatus according to any one of Claims 10 to 31.

## Patentansprüche

1. Verfahren zum Montieren einer Transparentvorlage (13) zum Scannen auf einer Trommel (1) eines Drehtrommel-Scanners, wobei das Verfahren umfasst:
dass die Transparentvorlage (13) an der Innenseite der Trommel platziert wird, und **dadurch gekennzeichnet,**
**dass** eine Flüssigkeit (10) an der Innenseite der Trommel vorgesehen wird; und
**dass** die Trommel mit einer ausreichend hohen Drehzahl gedreht wird, damit sich die Flüssigkeit über eine Oberfläche der Transparentvorlage bewegt, so dass sich ein Flüssigkeitsfilm auf dieser bildet.

2. Verfahren nach Anspruch 1, das umfasst, dass die Flüssigkeit (16) zwischen der inneren gekrümmten Oberfläche der Trommel (1) und der Transparentvorlage (13) vorgesehen wird, so dass, wenn die Trommel gedreht wird, der Flüssigkeitsfilm sich zwischen der Transparentvorlage und der Innenfläche der Trommel bildet.

3. Verfahren nach Anspruch 1 oder 2, das umfasst, dass eine Flüssigkeit an der Innenseite der Trommel vorgesehen wird, so dass, wenn die Trommel gedreht wird, der Flüssigkeitsfilm sich auf der Oberfläche der Transparentvorlage bildet, die fern von der Innenfläche der Trommel liegt.

4. Verfahren nach Anspruch 1, 2 oder 3, das ferner umfasst, dass eine Flüssigkeitsfalle (22) vorgesehen wird, um Flüssigkeit einzufangen, sobald die Trommel (1) gedreht worden ist.

5. Verfahren nach Anspruch 1, 2 oder 3, das ferner umfasst, dass ein Flüssigkeitsreservoir (8) vorgesehen wird, das in der Trommel (1) angeordnet werden kann, und dass Flüssigkeit (10) innerhalb des Reservoirs platziert wird, wobei eine Drehung der Trommel bewirkt, dass sich eine Flüssigkeit aus dem Reservoir (8) über die Oberfläche der Transparentvorlage (13) bewegt, so dass sich ein Flüssigkeitsfilm bildet, dessen Oberfläche fern von der Innenfläche der Trommel liegt.

6. Verfahren nach Anspruch 5, das ferner umfasst, dass eine Flüssigkeit zwischen der inneren gekrümmten Oberfläche der Trommel (1) und der Transparentvorlage (13) vorgesehen wird, bevor die Trommel gedreht wird.

7. Verfahren nach Anspruch 6, wobei die Flüssigkeit zwischen der Innenfläche der Trommel und der Transparentvorlage vorgesehen wird, indem die Trommel gedreht wird, so dass sich ein Flüssigkeitsfilm auf der inneren gekrümmten Oberfläche der Trommel bildet, und dann die Transparentvorlage auf der Innenseite der Trommel platziert wird.

8. Verfahren nach einem der vorhergehenden Ansprüche, das ferner umfasst, dass eine Flüssigkeitssperre (5) vorgesehen wird, um zu ververhindern, dass Flüssigkeit aus der Trommel (1) entweicht, wenn die Trommel gedreht wird.

9. Verfahren nach einem der vorhergehenden Ansprüche, das ferner umfasst, dass die Transparentvorlage (13) in ihrer Lage gehalten wird, während die Trommel (1) mit einer ausreichend hohen Drehzahl gedreht wird, damit die Transparentvorlage in Richtung der Innenseite der Trommel gedrängt wird.

10. Vorrichtung zum Montieren einer Transparentvorlage (13) zum Scannen auf einer Trommel (1) eines Drehtrommel-Scanners, wobei die Vorrichtung **gekennzeichnet ist durch**: eine Flüssigkeitsabgabeeinrichtung (8, 38, 40, 41), die derart angeordnet ist, dass sie eine Flüssigkeit in die Trommel des Scanners abgibt, und die derart angeordnet ist, dass eine Drehung der Trommel mit einer ausreichend hohen Drehzahl bewirkt, dass sich die Flüssigkeit über eine Oberfläche der Transparentvorlage bewegt, so dass sich ein Flüssigkeitsfilm auf dieser bildet und wobei die Transparentvorlage an der Innenfläche der Trommel angeordnet sein kann.

11. Vorrichtung nach Anspruch 10, wobei die Flüssigkeitsabgabeeinrichtung (8) ein Flüssigkeitsreservoir (8) umfasst, das an der Innenseite der Trommel (1) angeordnet sein kann.

12. Vorrichtung nach Anspruch 11, bei der das Flüssigkeitsreservoir (8) einen ringförmigen Kanal (9) umfasst, der koaxial in der Trommel (1) angeordnet sein kann.

13. Vorrichtung nach Anspruch 11 oder 12, bei der das Flüssigkeitsreservoir (8) in zwei oder mehr Fächer (18) unterteilt ist.

14. Vorrichtung nach Anspruch 12 oder 13, bei der der Kanal (9) des Flüssigkeitsreservoirs (8) profiliert ist, um das Reinigen zu erleichtern.

15. Vorrichtung nach Anspruch 14, wobei der Kanal (9) profiliert ist, so dass er im Wesentlichen fingerförmig ist.

16. Vorrichtung nach Anspruch 10, bei der die Flüssigkeitsabgabeeinrichtung (38, 40, 41) außerhalb der Trommel (1) angeordnet sein kann und die ferner ein Mittel (4) umfasst, um die Flüssigkeit (39) in die Trommel (1) hinein durch ein Ende (11) der Trommel hindurch abzugeben.

17. Vorrichtung nach Anspruch 16, die ferner eine Flüssigkeitsfalle (22) umfasst, die derart angeordnet ist, dass sie die Flüssigkeit einfängt, sobald die Trommel gedreht worden ist.

18. Vorrichtung nach Anspruch 17, bei der die Flüssigkeitsfalle (22) einen ringförmigen Kanal (23) umfasst, der koaxial in der Trommel angeordnet sein kann.

19. Vorrichtung nach Anspruch 18, bei der der ringförmige Kanal (23) absorbierendes Material (24) enthält, um die Flüssigkeit einzufangen.

20. Vorrichtung nach einem der Ansprüche 10 bis 19, die ferner eine Flüssigkeitssperre (5) umfasst, die derart angeordnet ist, dass sie verhindert, dass Flüssigkeit aus der Trommel (1) entweicht, wenn diese gedreht wird.

21. Vorrichtung nach Anspruch 20, bei der die Flüssigkeitssperre (5) einen ringförmigen Kanal (7) umfasst, der koaxial in der Trommel angeordnet sein kann.

22. Vorrichtung nach Anspruch 21, bei der der Kanal (7) der Flüssigkeitssperre (5) profiliert ist, um das Reinigen zu erleichtern.

23. Vorrichtung nach einem der Ansprüche 20 bis 22, wobei, wenn die Trommel (1) um eine Achse (2) drehbar ist, die im Wesentlichen vertikal ist oder unter einem kleinen Winkel dazu steht, das Flüssigkeitsreservoir (8) am unteren Ende der Trommel angeordnet sein kann, und die Flüssigkeitssperre (5) am oberen Ende der Trommel angeordnet sein kann.

24. Vorrichtung nach einem der Ansprüche 10 bis 23, die ferner ein Mittel (17) umfasst, um die Flüssigkeit (16) zwischen der Oberfläche der Transparentvorlage (13) und der inneren gekrümmten Oberfläche der Trommel (1) zu platzieren, bevor die Trommel gedreht wird.

25. Vorrichtung nach einem der Ansprüche 10 bis 24, die ferner ein Mittel (12) umfasst, um die Transparentvorlage (13) in ihrer Lage zu halten, bis die Trommel (1) mit einer ausreichend hohen Drehzahl gedreht wird, damit die Transparentvorlage gegen die Innenfläche der Trommel gedrängt wird.

26. Vorrichtung nach Anspruch 25, bei der das Mittel (12) eine Klammer (14, 15) umfasst, die derart angeordnet ist, dass sie mindestens einen Rand der Transparentvorlage (13) gegen die Innenfläche der Trommel drängt.

27. Vorrichtung nach Anspruch 26, wenn von einem der Ansprüche 11 bis 15 abhängig, wobei die Klammer (12) als ein integraler Teil des Flüssigkeitsreservoirs (8) ausgebildet ist.

28. Vorrichtung nach Anspruch 27, bei der die Klammer (12) einen Spalt (20) umfasst, der zwischen der inneren gekrümmten Oberfläche der Trommel (1) und der äußeren Oberfläche des ringförmigen Kanals (9) ausgebildet ist.

29. Vorrichtung nach einem der Ansprüche 10 bis 28, bei der die Flüssigkeit ein Reinigungsmittel umfasst.

30. Vorrichtung nach einem der Ansprüche 10 bis 29, bei der die Flüssigkeit einen Farbstoff umfasst, um bei der Beobachtung der Bewegung der Flüssigkeit über die Innenfläche der Trommel zu helfen.

31. Vorrichtung nach einem der Ansprüche 10 bis 30, bei der die Flüssigkeit einen Brechungsindex aufweist, der im Wesentlichen gleich ist wie der Brechungsindex der Trommel.

32. Trommel (1), die eine Vorrichtung nach einem der Ansprüche 10 bis 31 enthält.

33. Drehtrommel-Scanner, der eine Vorrichtung nach einem der Ansprüche 10 bis 31 enthält.

## Revendications

1. Procédé de montage d'une diapositive (13), pour numérisation, sur un tambour (1) d'un numériseur à tambour rotatif, le procédé comprenant :
le placement de la diapositive (13) sur le côté intérieur du tambour, et ***caractérisé par*** la fourniture d'un liquide (10) sur le côté intérieur du tambour ; et
la mise en rotation du tambour à une vitesse suffisamment élevée pour que le liquide se déplace sur une surface de la diapositive pour y former un film de liquide.

2. Procédé selon la Revendication 1 et comprenant la fourniture du liquide (16) entre la surface intérieure incurvée du tambour (1) et la diapositive (13) de telle sorte que, lorsque le tambour est entraîné en rotation, le film de liquide se forme entre la diapositive et la surface intérieure du tambour.

3. Procédé selon la Revendication 1 ou la Revendication 2, et comprenant la fourniture de liquide sur le côté intérieur du tambour de telle sorte que, lorsque le tambour est entraîné en rotation, le film de liquide se forme sur la surface de la diapositive qui est éloignée de la surface intérieure du tambour.

4. Procédé selon la Revendication 1, la Revendication 2, ou la Revendication 3, et comprenant de plus la fourniture d'un piège (22) à liquide pour piéger le liquide après que le tambour (1) ait été entraîné en rotation.

5. Procédé selon la Revendication 1, la Revendication 2, ou la Revendication 3, et comprenant de plus la fourniture d'un réservoir (8) de liquide pouvant être placé dans le tambour (1) et le placement du liquide (10) dans le réservoir, dans lequel la rotation du tambour provoque le déplacement de liquide du réservoir (8) sur la surface de la diapositive (13) pour former un film de liquide dont la surface est éloignée de la surface intérieure du tambour.

6. Procédé selon la Revendication 5, et comprenant de plus la fourniture de liquide entre la surface intérieure incurvée du tambour (1) et la diapositive (13) avant que le tambour ne soit entraîné en rotation.

7. Procédé selon la Revendication 6, dans lequel le liquide est fourni entre la surface intérieure du tambour et la diapositive par rotation du tambour pour former un film de liquide sur la surface intérieure incurvée du tambour puis le placement de la diapositive sur le côté intérieur du tambour.

8. Procédé selon l'une quelconque des Revendications précédentes et comprenant de plus la fourniture d'un élément d'arrêt (5) du liquide pour empêcher le liquide de s'échapper du tambour (1) lorsque le tambour est entraîné en rotation.

9. Procédé selon l'une quelconque des Revendications précédentes et comprenant de plus le maintien en place de la diapositive (13) pendant que le tambour (1) est entraîné en rotation jusqu'à une vitesse suffisamment élevée pour que la diapositive soit forcée vers le côté intérieur du tambour.

10. Dispositif de montage d'une diapositive (13), pour numérisation, sur un tambour (1) d'un numériseur à tambour rotatif, le dispositif étant ***caractérisé par* :** un distributeur (8, 38, 40, 41) de liquide aménagé pour distribuer du liquide dans le tambour du numériseur et aménagé de telle sorte que la rotation du tambour à vitesse suffisamment élevée provoque le déplacement du liquide sur une surface de la diapositive pour y former un film de liquide et dans lequel ladite diapositive peut être placée contre la surface intérieure du tambour.

11. Dispositif selon la Revendication 10, dans lequel le distributeur (8) de liquide comprend un réservoir (8) de liquide pouvant être placé sur le côté intérieur du tambour (1).

12. Dispositif selon la Revendication 11, dans lequel le réservoir (8) de liquide comprend un canal annulaire (9) qui peut être placé coaxialement dans le tambour (1).

13. Dispositif selon la Revendication 11 ou la Revendication 12, dans lequel le réservoir (8) de liquide est divisé en deux compartiments (18) ou plus.

14. Dispositif selon la Revendication 12 ou la Revendication 13, dans lequel le canal (9) du réservoir (8) de liquide est profilé pour faciliter le nettoyage.

15. Dispositif selon la Revendication 14, dans lequel le canal (9) est profilé pour offrir essentiellement la forme d'un doigt.

16. Dispositif selon la Revendication 10, dans lequel le distributeur (38, 40, 41) de liquide peut être placé extérieurement au tambour (1) et comprenant de plus des moyens (4) pour distribuer le liquide (39) dans le tambour (1) à travers une extrémité (11) du tambour.

17. Dispositif selon la Revendication 16 et comprenant de plus un piège (22) à liquide aménagé pour piéger le liquide après que le tambour ait été entraîné en rotation.

18. Dispositif selon la Revendication 17, dans lequel le piège (22) à liquide comprend un canal annulaire (23) qui peut être placé coaxialement dans le tambour.

19. Dispositif selon la Revendication 18, dans lequel le canal annulaire (23) contient un matériau absorbant (24) pour piéger le liquide.

20. Dispositif selon l'une quelconque des Revendications 10 à 19, et comprenant de plus un élément d'arrêt (5) du liquide pour empêcher le liquide de s'échapper du tambour lorsque le tambour (1) est entraîné en rotation.

21. Dispositif selon la Revendication 20, dans lequel l'élément d'arrêt (5) du liquide comprend un canal annulaire (7) qui peut être placé coaxialement dans le tambour.

22. Dispositif selon la Revendication 21, dans lequel le canal (7) de l'élément d'arrêt (5) du liquide est profilé pour faciliter le nettoyage.

23. Dispositif selon l'une quelconque des Revendications 20 à 22, dans lequel, lorsque le tambour (1) est entraîné en rotation autour d'un axe (2) qui est sensiblement vertical, ou selon un faible angle par rapport à la verticale, le réservoir (8) de liquide peut être situé à l'extrémité intérieure du tambour et l'élément (5) d'arrêt du liquide peut être situé à l'extrémité supérieure du tambour.

24. Dispositif selon l'une quelconque des Revendications 10 à 23, et comprenant de plus des moyens (17) pour placer du liquide (16) entre la surface de la diapositive (13) et la surface intérieure incurvée du tambour (1) avant que le tambour ne soit entraîné en rotation.

25. Dispositif selon l'une quelconque des Revendications 10 à 24, et comprenant de plus des moyens (12) pour maintenir en place la diapositive (13) pendant que le tambour (1) est entraîné en rotation à une vitesse suffisamment élevée pour que la diapositive soit forcée contre la surface intérieure du tambour.

26. Dispositif selon la Revendication 25, dans lequel les moyens (12) comprennent une pince (14, 15) prévue pour forcer au moins un bord de la diapositive (13) contre la surface intérieure du tambour.

27. Dispositif selon la Revendication 26 lorsqu'elle est dépendant de l'une quelconque des Revendications 11 à 15, dans lequel la pince (12) est formée comme une partie intégrante du réservoir (8) de liquide.

28. Dispositif selon la Revendication 27, dans lequel la pince (12) comprend un étranglement (20) formé entre la surface intérieure incurvée du tambour (1) et la surface extérieure du canal annulaire (9).

29. Dispositif selon l'une quelconque des Revendications 10 à 28, dans lequel le liquide comprend un agent nettoyant.

30. Dispositif selon l'une quelconque des Revendications 10 à 29, dans lequel le liquide comprend un colorant pour aider à observer le déplacement du liquide sur la surface intérieure du tambour.

31. Dispositif selon l'une quelconque des Revendications 10 à 30, dans lequel le liquide possède un indice de réfraction sensiblement identique à l'indice de réfraction du tambour.

32. Tambour (1) englobant le dispositif selon l'une quelconque des Revendications 10 à 31.

33. Numériseur à tambour rotatif englobant le dispositif selon l'une quelconque des Revendications 10 à 31.
